# EUROPÄISCHE PATENTANMELDUNG

(11) **EP 4 455 062 A1**
(43) Veröffentlichungstag der Anmeldung: **30.10.2024**
(21) Anmeldenummer: 24169436.3
(22) Anmeldetag: 10.04.2024
(51) Int. Cl.: B65G 43/08, B65G 47/08, B65G 47/52, B65G 47/91

(54) **VERFAHREN UND VORRICHTUNG ZUR BEARBEITUNG VON GLASBEHÄLTERN MIT EINER PUFFERAUFNAHME ZUR ELIMINIERUNG VON LEERSTELLEN**

(30) Priorität: 28.04.2023 DE 102023111139
(71) Anmelder: AMBEG Dr. J. Dichter GmbH, 10829 Berlin (DE)
(72) Erfinder: LANGER, Matthias, 12355 Berlin (DE)
(74) Vertreter: Grünecker Patent- und Rechtsanwälte PartG mbB

(57) **Zusammenfassung**

Die Erfindung betrifft ein Verfahren und eine Vorrichtung (1) zur Handhabung von Glasbehältern (2), beispielsweise Spritzen, Fläschchen, Karpulen oder Ampullen. Eine Anzahl m von Glasbehältern (2) wird an einer vorbestimmten Anzahl n von Entnahmepositionen (4) bereitgestellt. Zufällig verteilt können in den n Entnahmepositionen n - m Leerstellen oder Ausschussteile enthalten sein, wobei m kleiner oder gleich n ist und auch Null sein kann. Mittels n Aufnehmern (6) werden m Glasbehälter (2) aus den Entnahmepositionen entnommen und auf m von n Pufferaufnahmen (24) abgelegt. Die Pufferaufnahmen (24) sind unabhängig voneinander verfahrbar, so dass die m Glasbehälter in den n Aufnahmen auf m unmittelbar nebeneinanderliegenden Pufferbehältern abgelegt werden. Auf diese Weise lässt sich der Produktstrom aus Glasbehältern (2) verdichten, indem Leerstellen (52) oder Ausschussteile aus dem Produktstrom entfernt werden. Zusätzlich kann der Abstand zwischen den Glasbehältern angepasst werden.

## Beschreibung

Die Erfindung betrifft ein Verfahren und eine Vorrichtung zur Handhabung von Glasbehältern, insbesondere kleinen Glasbehältern wie beispielsweise Spritzen, Fläschchen, Karpulen oder Ampullen.

Derartige Verfahren und Vorrichtungen sind bekannt. Problematisch ist allerdings, dass die Glasbehälter sehr empfindlich sind und engen Fertigungstoleranzen unterliegen. Im Zuge der Herstellung und Bearbeitung der Glasbehälter können diese also zerbrechen oder aufgrund von Schwankungen im Herstellungsbetrieb Ausschuss darstellen. Nachfolgende Bearbeitungsschritte gestalten sich komplex, wenn im Strom der zu bearbeitenden Glasbehälter Leerstellen oder Ausschuss enthalten ist. So bedeutet es beispielsweise einen unnötigen Aufwand an Ressourcen, wenn Ausschuss bearbeitet wird, weil er im Produktstrom verbleibt.

Der Erfindung liegt folglich die Aufgabe zugrunde, ein Verfahren und eine Vorrichtung bereitzustellen, die diese Probleme vermeidet.

Gelöst wird diese Aufgabe erfindungsgemäß durch ein Verfahren zur Handhabung von Glasbehältern, beispielsweise Spritzen, Fläschchen, Karpulen oder Ampullen, umfassend die folgenden Schritte: Bereitstellen einer Anzahl m von Glasbehältern an einer vorbestimmten Anzahl n von Entnahmepositionen, wobei an jeder der n Entnahmepositionen höchstens ein Glasbehälter bereitgestellt ist, wobei die n Entnahmepositionen eine zufällige Anzahl von n-m leeren und/oder Ausschuss enthaltenden Entnahmepositionen aufweisen und wobei m kleiner oder gleich n ist; Entnehmen der m Glasbehälter aus den n Entnahmepositionen mittels einer Anzahl n von Aufnehmern; Bestimmen der Anzahl und/oder Position der leeren und/oder Ausschuss enthaltenden Entnahmepositionen und/oder Aufnehmer; Bereitstellen einer Anzahl m von unmittelbar nebeneinanderliegender Pufferaufnahmen aus einer Anzahl von insgesamt wenigstens n Pufferaufnahmen; und Ablegen der m Glasbehälter aus den Aufnehmern auf den m unmittelbar nebeneinanderliegenden, von den Entnahmepositionen beabstandet angeordneten Pufferaufnahmen.

Ferner wird die obige Aufgabe gelöst durch eine Vorrichtung zur Handhabung von Glasbehältern wie Spritzen, Fläschchen, Karpulen oder Ampullen , mit einer Anzahl n von Entnahmepositionen, an denen jeweils ein Glasbehälter bereitstellbar ist, wobei in den n Entnahmepositionen zufällig verteilt eine Anzahl von k leeren und/oder Ausschuss enthaltenden Entnahmepositionen enthalten ist; mit einer Anzahl von wenigstens n beweglichen Pufferaufnahmen, die von den Entnahmepositionen beabstandet sind; und mit einer Anzahl von wenigstens n Aufnehmern, die jeweils ausgestaltet sind, einen Glasbehälter aus einer Entnahmeposition zu entnehmen, zu den Pufferaufnahmen zu bewegen und auf den Pufferaufnahmen abzulegen; wobei wenigstens n-1 der n Pufferablagen unabhängig voneinander in unterschiedlichem Abstand zueinander verfahrbar ausgestaltet sind.

Das oben beschriebene Verfahren und die oben beschriebene Vorrichtung verdichten den Leerstellen enthaltenden Produktstrom während der Verarbeitung, indem die Leerstellen eliminiert werden. Enthält der Produktstrom Ausschuss, so wird dieser nicht weitertransportiert und somit aus dem Produktstrom entfernt. Dies ist dadurch möglich, dass nur für diejenigen Aufnehmer Pufferaufnahmen bereitgestellt werden, die Glasbehälter und somit keinen Ausschuss oder Leerstellen aufweisen, und dass sich die Pufferaufnahmen, die mit den Glasbehältern aus den Aufnehmern bestückt werden, sich zudem unmittelbar nebeneinander befinden. Dies bedeutet, dass zwischen den unmittelbar nebeneinanderliegenden Pufferaufnahmen sich keine weitere Pufferaufnahme befindet, wobei aber die unmittelbar nebeneinanderliegenden Pufferaufnahmen voneinander beabstandet sein können. Somit befinden sich nach der Ablage der Glasbehälter in den nebeneinanderliegenden Pufferaufnahmen Glasbehälter ohne eine Leerstelle dazwischen. Im nachfolgenden Produktstrom befinden sich keine Leerstellen mehr.

Die Platzhalter n und m stehen für natürliche Zahlen, wobei m auch Null sein kann.

Die obige Erfindung kann durch die folgenden Merkmale, die jeweils für sich vorteilhaft und beliebig miteinander kombinierbar sind, weiter verbessert werden. Die nachstehend beschriebenen Merkmale können dabei unabhängig voneinander sowohl die Vorrichtung als auch das Verfahren verbessern, selbst wenn das jeweilige Merkmal nur im Zusammenhang mit einem Verfahren oder nur im Zusammenhang mit einer Vorrichtung genannt ist. Ist das weiterbildende Merkmal nur im Zusammenhang mit einem Verfahren genannt, so ergibt sich daraus beispielsweise, dass die Vorrichtung weiterbildend dazu ausgestaltet ist, dieses Verfahrensmerkmal auszuführen.

So erfolgen beispielsweise die Entnahme der Glasbehälter aus den Entnahmepositionen, die Bestimmung der Anzahl und/oder Position der leeren und/oder Ausschuss enthaltenden Entnahmepositionen und/oder Aufnehmer, das Bereitstellen der Pufferaufnahmen und/oder die Ablage der Glasbehälter bevorzugt automatisch. Hierzu kann die Vorrichtung mit einer entsprechend ausgestalteten Steuereinheit versehen sein.

Die n Aufnehmer können baulich miteinander vereint sein, was den Konstruktionsaufwand verringert. Sie können ausgestaltet sein, n Glasbehälter gleichzeitig aus den n Entnahmepositionen zu entnehmen, zu den Pufferabnahmen zu bewegen und auf den Pufferaufnahmen abzulegen, um einen möglichst hohen Produktdurchsatz zu erzielen. So können die Abnehmer beispielsweise Teil einer als ein Roboter ausgestalteten Aufnahmeeinrichtung sein. Der Roboter kann als ein Mehr-Achs-Roboter oder als ein Portalroboter ausgestaltet sein. Die Abnehmer können insbesondere Teil eines austauschbaren Endeffektors sein. Durch Austausch und/oder Modifikation des Endeffektors können unterschiedliche Behälterformen und/oder unterschiedlich beabstandete Entnahmepositionen bedient werden.

Gemäß einer weiteren vorteilhaften Ausgestaltung ist jede Entnahmeposition von einer einen Glasbehälter aufnehmenden, beweglichen Behälteraufnahme gebildet und/oder es befindet sich an jeder Entnahmeposition zum Zeitpunkt der Aufnahme der Glasbehälter durch die Aufnehmer eine Behälteraufnahme. Eine Behälteraufnahme nimmt insbesondere einen einzigen Glasbehälter in einer vorbestimmten Lage und Orientierung auf, so dass ein Aufnehmer aufgrund dieser Lagebestimmtheit sicher auf den Glasbehälter zugreifen kann. Eine Behälteraufnahme kann beispielsweise einen bevorzugt selbstzentrierenden Sitz, beispielsweise eine V-förmige Anordnung für einen Behälterbauch und/oder einen Behälterhals aufweisen.

Die Behälteraufnahmen können beispielsweise automatisch von vorgeschalteten Herstellungsund/oder Bearbeitungsschritten zu den Entnahmepositionen bewegt werden. Sobald sich die Behälteraufnahmen an den jeweiligen Entnahmepositionen befinden, können die Glasbehälter von den Aufnehmern aus den Behälteraufnahmen entnommen werden. Jeder Aufnehmer ist dabei bevorzugt genau einer Entnahmeposition zugeordnet.

Die Behälteraufnahmen können Teil eines Fördersystems sein, das beispielsweise einen Fördergurt, eine Förderkette und/oder ein Förderband aufweist, auf dem sich die Behälteraufnahmen befinden oder von dem sie gebildet sind. Das Fördersystem ist insbesondere ausgestaltet, die Glasbehälter in den Behälteraufnahmen von beispielsweise einer vorgeschalteten Herstellungsund/oder Bearbeitungsstation zu den Entnahmepositionen zu bewegen. Das Fördersystem weist bevorzugt wenigstens n in die Entnahmeposition bewegliche Behälteraufnahmen auf. Die Entnahmepositionen können in Längsrichtung der Glasbehälter nebeneinander und/oder hintereinander, als eine Reihe oder als ein Feld angeordnet sein.

Der Transport erfolgt bevorzugt automatisch. Beispielsweise ist das Fördersystem ebenfalls von der Steuereinheit gesteuert. Während der Entnahme der Glasbehälter aus den Behälteraufnahmen ist der Transport bevorzugt kurzzeitig angehalten, so dass sich die Position der Glasbehälter während der Entnahme nicht ändert. Dies vereinfacht im Gegensatz zu sich mit den Behälteraufnahmen mitbewegten Aufnehmern die Steuerung.

Die Pufferaufnahmen können identisch zu den Behälteraufnahmen ausgestaltet sein. Die Pufferaufnahmen fixieren bevorzugt die Lage und Orientierung der darauf abgelegten Glasbehälter. Jede Pufferaufnahme nimmt bevorzugt nur einen Glasbehälter auf. Die Pufferaufnahmen können einen beispielsweise selbstzentrierenden, insbesondere V-förmigen Sitz für einen Behälterhals und/oder einen Behälterbauch aufweisen. Mit diesen Maßnahmen lassen sich jeweils die Glasbehälter sicher auf den Pufferaufnahmen ablegen und gegebenenfalls auch wieder sicher entnehmen.

Zwischen der Entnahme der Glasbehälter aus den Entnahmepositionen und der Ablage auf den Pufferaufnahmen kann die Ausrichtung der Glasbehälter geändert werden, beispielsweise indem sie gemeinsam und/oder einzeln um eine senkrecht zur Längsrichtung der Glasbehälter verlaufende Achse gedreht werden. Dies ist dann von Vorteil, wenn beispielsweise aus Platzgründen die Glasbehälter in nachfolgenden Bearbeitungsschritten oder, gleichbedeutend, Bearbeitungsstationen eine andere Ausrichtung als in den Behälteraufnahmen benötigen.

Gemäß einem Aspekt der Erfindung werden die m unmittelbar nebeneinanderliegenden Pufferaufnahmen in Ablagepositionen gefahren, zu denen sich die m Glasbehälter aufweisenden Aufnehmer bevorzugt gleichzeitig bewegen.

Die Pufferaufnahmen sind in einer Ausgestaltung unabhängig voneinander und insbesondere automatisch in jeweils einen beliebigen Abstand voneinander beweglich. Beispielsweise kann jede Pufferaufnahme an einem eigenen Schlitten angebracht sein, der unabhängig von den anderen Schlitten bevorzugt translatorisch verfahrbar ist. Die Pufferaufnahmen können Teil einer Puffereinrichtung, insbesondere Teil eines Multi-Carrier-Systems sein.

Eine der Pufferaufnahmen kann stationär sein. Sie kann als Referenz dienen, relativ zu der dann die übrigen Pufferaufnahmen verfahren werden.

Die Puffereinrichtung bzw. die Pufferaufnahmen können gemäß einer Ausgestaltung von einer Pufferbestückungsstellung in eine Pufferentnahmestellung und zurück überführt werden. In der Pufferbestückungsstellung befindet sich dabei wenigstens ein Teil der Pufferaufnahmen an anderen Positionen als in der Pufferentnahmestellung. So können sich in der Pufferbestückungsstellung wenigstens m der n Pufferaufnahmen in jeweils einer Ablageposition befinden. In der Pufferentnahmestellung können sich dagegen wenigstens m der n Pufferaufnahmen jeweils in der Aufnahmeposition befinden.

Zur Ablage der Glasbehälter befinden sich die Pufferaufnahmen in einer Ausführung in den Ablagepositionen. Jedem Aufnehmer kann eine solche Ablageposition zugeordnet sein. Der Abstand der Ablagepositionen entspricht bevorzugt dem Abstand der Aufnehmer. So kann sich unter jedem Abnehmer eine Ablageposition befinden. Aufgrund der unabhängig voneinander verfahrbaren Pufferaufnahmen kann jede Pufferaufnahme jeder Ablageposition zugeordnet werden. Insbesondere ist es möglich, dass sich an einer oder mehreren Ablagepositionen bei der Ablage der Glasbehälter aus den Aufnehmern auf den Pufferaufnahmen keine Pufferaufnahme befindet. Dies ist beispielsweise dann von Nutzen, wenn diese(r) Aufnehmer keine Glasbehälter hat, also eine Leerstelle aufweist, oder Ausschuss trägt. Enthält ein Aufnehmer eine Leerstelle oder Ausschuss, dann befinden sich die Pufferaufnahmen nur an den Ablagepositionen bzw. werden nur in diejenigen Ablagepositionen verfahren, die Aufnehmern zugeordnet sind, die Glasbehälter aufweisen.

Um festzustellen, ob eine Entnahmeposition und/oder ein Aufnehmer eine Leerstelle oder Ausschuss aufweist, kann die Vorrichtung einen Leerstellendetektor aufweisen. Die Vorrichtung ist dabei bevorzugt ausgestaltet, die derzeitige bzw. aktuelle Position einer Leerstelle oder von Ausschuss zu speichern und über die Zeit nachzuverfolgen. Der Leerstellendetektor kann beispielsweise ein auf die Entnahmeposition und/oder die Aufnehmer gerichtetes Kamerasystem aufweisen. Der Leerstellendetektor kann auch mit den Aufnehmern signalübertragend verbunden zu sein, um leere Aufnehmer zu ermitteln.

Die wenigstens eine Pufferaufnahme, die im Falle einer Leerstelle und/oder im Falle von Ausschuss keiner Ablageposition zugeordnet ist, kann sich insbesondere jenseits der Ablagepositionen befinden bzw. bewegt sein, so dass sämtliche Ablagepositionen zu einer Seite dieser wenigstens einen Pufferaufnahme liegen.

Durch die unabhängig verfahrbaren Pufferaufnahmen lassen sich ferner beliebige Abstände zwischen den Pufferaufnahmen einstellen.

Entsprechend können die m unmittelbar nebeneinanderliegenden Pufferaufnahmen nach der Ablage der Glasbehälter auf den Pufferaufnahmen in m Aufnahmepositionen verfahren werden. Die Aufnahmepositionen können insbesondere wenigstens teilweise in einem anderen Abstand voneinander angeordnet sein als die m Ablagepositionen. Dies ist beispielsweise dann sinnvoll, wenn die Glasbehälter aus den Pufferaufnahmen in einem anderen Abstand als bei der Ablage entnommen werden müssen oder wenn eine wegen einer Leerstelle oder Ausschuss nicht mit einer Pufferaufnahme belegte Ablageposition ausgeglichen werden muss.

Die Ablagepositionen können, wie auch die Entnahme- und/oder Aufnahmepositionen jeweils gleich weit voneinander beabstandet sein. Dies ist gleichbedeutend damit, dass benachbarte Ablagepositionen jeweils gleich weit voneinander beabstandet sind.

In einer Ausgestaltung können die m Glasbehälter aus den Pufferaufnahmen in den m unmittelbar nebeneinanderliegenden Aufnahmepositionen insbesondere gleichzeitig entnommen werden, um sie einem weiteren Bearbeitungsschritt zuzuführen.

Die den Pufferaufnahmen entnommenen Glasbehälter können insbesondere gleichzeitig auf einem weiteren Fördersystem abgelegt werden, das die Glasbehälter ohne Leerstellen zu einer weiteren Bearbeitungsstation transportiert. Dabei werden die m aus den Pufferaufnahmen entnommenen Glasbehälter unmittelbar neben zuvor, also in einem vorherigen Arbeitsschritt bzw. Arbeitstakt den Pufferaufnahmen entnommenen Glasbehältern abgelegt. Der Abstand, in dem die Glasbehälter abgelegt werden, entspricht dabei vorteilhaft dem Abstand der Aufnahmepositionen. Die Zwischenlagerung der Glasbehälter auf den Pufferaufnahmen dient somit dazu, den Abstand zwischen benachbarten Glasbehältern zu ändern. Gleichzeitig werden mit Hilfe der unabhängig verfahrbaren Pufferbehälter Leerstellen und Ausschuss aus dem Produktstrom entfernt, so dass die Glasbehälter nach der Entnahme aus den Pufferaufnahmen wieder leerstellenfrei unmittelbar nebeneinander angeordnet sind.

Alternativ können die den Pufferaufnahmen entnommenen Glasbehälter wiederum bevorzugt gleichzeitig in Sammelaufnahmen einer Sammeleinrichtung leerstellenfrei abgelegt werden, um zunächst eine bestimmte Anzahl von Glasbehältern zu sammeln, bevor sie in größeren Chargen als n weiterbearbeitet, beispielsweise verpackt werden. Jede Sammelaufnahme nimmt bevorzugt - wie beispielsweise eine Behälteraufnahme und/oder eine Pufferaufnahme - einen einzigen Glasbehälter in einer bestimmten Position lagefixiert auf. Beispielsweise kann eine Sammelaufnahme einen bevorzugt selbstzentrierenden Sitz für einen Behälterhals und/oder einen Behälterbauch aufweisen. Ein solcher Sitz kann durch V-förmige Halter hergestellt sein. Die Sammeleinrichtung weist beispielsweise I Sammelaufnahmen für insgesamt I Glasbehälter auf, wobei I eine natürliche Zahl ist, die größer als n, bevorzugt ein ganzzahliges Vielfaches von n ist.

Zwischen der Entnahme der Glasbehälter aus den Pufferaufnahmen und ihrer Ablage können die Glasbehälter einzeln oder gemeinsam um eine senkrecht zu ihrer Längsachse verlaufende Drehachse gedreht werden, falls eine andere Ausrichtung bei ihrer Ablage notwendig ist.

Sobald die für die Weiterverarbeitung notwendige Chargengröße von beispielsweise I Glasbehältern erreicht ist, werden in einer Ausgestaltung I Glasbehälter der Sammeleinrichtung entnommen, wobei I mindestens so groß wie n ist. Dabei werden die der Sammeleinrichtung entnommenen Glasbehälter bevorzugt im Abstand der Abnahmepositionen einem weiteren Bearbeitungsschritt zugeführt. So kann der Abstand der Aufnahmepositionen einem Abstand entsprechen, den die Glasbehälter in einer Verpackung voneinander haben. Hierzu können die m unmittelbar nebeneinanderliegenden Pufferaufnahmen nach Ablage der m Glasbehälter auf einen Abstand verfahren werden, der dem Abstand der Glasbehälter in der Sammeleinrichtung entspricht.

Um die m Glasbehälter aus den Pufferaufnahmen in die Sammelaufnahmen oder eine andere Einrichtung, beispielsweise eine Fördereinrichtung, zu überführen, kann die Vorrichtung ein Übergabesystem aufweisen, das beispielsweise einen Roboter wie einen Mehr-Achs-Roboter oder einen Portalroboter umfasst. In einer Ausgestaltung kann das Übergabesystem Halter aufweisen, die jeweils ausgestaltet sind, insbesondere genau einen Glasbehälter aus einer Pufferaufnahme zu entnehmen und ihn auf einer Sammelaufnahme oder einer anderen Aufnahme abzulegen. Die Pufferaufnahme befindet sich dabei bevorzugt in einer der Aufnahmepositionen.

Die Anzahl der Halter entspricht bevorzugt wenigstens der Anzahl der Pufferaufnahmen oder einem ganzzahligen Teiler oder einem ganzzahligen Vielfachen der Anzahl der Pufferaufnahmen.

Der Abstand benachbarter Halter unterscheidet sich in einer Ausgestaltung vom Abstand benachbarter Aufnehmer. Der Abstand benachbarter Halter entspricht insbesondere dem Abstand benachbarter Aufnahmepositionen.

Zwischen der Sammeleinrichtung und einer nachgelagerten Bearbeitungsstation, beispielsweise einer Verpackungsstation, die ausgestaltet ist, wenigstens eine Verpackung aufzunehmen, in der die Glasbehälter eingelegt werden, kann ein Transfersystem angeordnet sein, das ausgestaltet ist, p insbesondere unmittelbar nebeneinanderliegende Glasbehälter gleichzeitig aus den Sammelaufnahmen zu entnehmen. Hierzu kann das Transfersystem Greifer aufweisen, die jeweils ausgestaltet sind, genau einen Glasbehälter aufzunehmen und in der nachgelagerten Bearbeitungsstation abzulegen. Die Greifer sind im Abstand der Sammelaufnahmen voneinander beabstandet angeordnet. Bevorzugt sind sie starr, können jedoch in einer anderen Ausgestaltung auch relativ zueinander beweglich, beispielsweise verstellbar oder verfahrbar sein.

Das Transfersystem kann als ein Roboter, beispielsweise ein Mehr-Achs-Roboter oder als ein Portalroboter ausgestaltet sein. Die Greifer können Teil eines insbesondere austauschbaren Endeffektors des Roboters sein. Beispielsweise können je nach Verpackungsgröße unterschiedliche Endeffektoren eingesetzt werden.

Das Transfersystem weist in einer Ausgestaltung p Greifer auf, wobei I - p wenigstens der um eins verringerten Anzahl der Halter entsprechen kann, bei n Haltern würde also I - p der Anzahl n - 1 entsprechen. Damit ist sichergestellt, dass obwohl noch nicht p unmittelbar nebeneinanderliegende Sammelaufnahmen mit Glasbehältern befüllt sind, sämtliche Halter notfalls noch die von ihnen herantransportierten Glasbehälter in unmittelbar nebeneinanderliegenden Sammelaufnahmen, also leerstellenfrei, ablegen können.

Das Transfersystem kann ausgestaltet sein, gleichzeitig p nebeneinanderliegende Glasbehälter aus den Sammelaufnahmen zu entnehmen, sobald p nebeneinanderliegenden Sammelaufnahmen mit Glasbehältern bestückt sind. Die p nebeneinanderliegenden Glasbehälter erstrecken sich bis zu einem Ende der Sammelaufnahmen. Auf diese Weise entstehen beim Entfernen von p Glasbehältern selbst dann keine Lücken zwischen den sich auf den Sammelaufnahmen befindlichen Glasbehältern, wenn sich mehr als p Sammelbehälter auf den Sammelaufnahmen befinden.

Das Übergabesystem kann in einer Ausführung ausgestaltet sein, die Sammelaufnahmen in stets derselben Richtung mit Glasbehältern zu bestücken. Das Übergabesystem legt also die neu abzulegenden Glasbehälter stets auf derselben Seite neben den sich bereits in den Sammelaufnahmen befindlichen Glasbehälter ab.

Grundsätzlich ist es von Vorteil, wenn die Behälter aus den Sammelaufnahmen jeweils von einem Ende der Reihe der mit Glasbehältern bestückten Sammelaufnahmen aufgenommen werden. Gemäß einer weiteren Ausgestaltung kann das Transfersystem ausgestaltet sein, die Glasbehälter stets von dem Ende her aus den Sammelaufnahmen zu entnehmen, an dem zuletzt Glasbehälter abgelegt wurden. Sind Leerstellen und/oder Ausschuss vorhanden so kann die Lage dieses Ende bei Erreichen von p Glasbehältern in den Sammelaufnahmen variieren. Bei dieser Ausgestaltung sollte also das Transfersystem ausgestaltet sein, die Position der zuletzt abgelegten Glasbehälter, insbesondere das Ende, an dem sich die zuletzt abgelegten Glasbehälter befinden, anzufahren. Dazu kann beispielsweise die Position des Endes in einem Speicher der Vorrichtung hinterlegt sein.

Betrachtet man die beiden vorhergehenden Ausgestaltungen zusammen, so werden die Reihe der Glasbehälter in den Sammelaufnahmen in der einen Richtung, ausgehend von dem einen Ende der Reihe, durch das Übergabesystem aufgebaut und in der anderen Richtung, ausgehend vom anderen Ende der Reihe, wieder entnommen. Dies ist insbesondere dann sinnvoll, wenn aufgrund von Leerstellen die Anzahl der vom Transfersystem abgelegten Glasbehälter variieren kann.

Die Aufnehmer, Halter und/oder Greifer können als Greifzangen, Sauger oder in die Behälter einführbare Stangen ausgebildet sein oder diese aufweisen.

Die Anzahl der Entnahmepositionen, Aufnehmer, Pufferaufnahmen und Halter richtet sich nach dem gewünschten Produktdurchsatz und der gewünschten Taktrate. Bei gleichbleibender Taktrate kann der Durchsatz erhöht werden, wenn die Anzahl der Entnahmepositionen, Aufnehmer, Pufferaufnahmen und Halter erhöht wird.

Im Folgenden ist die Erfindung anhand von Ausführungsbeispielen mit Bezug auf die beigefügten Figuren näher erläutert. Dabei können einzelne, im nachstehenden Ausführungsbeispiel vorhandene Merkmal weggelassen werden, wenn es nach Maßgabe der obigen Ausführungsformen auf den mit diesem Merkmal verknüpften technischen Effekt nicht ankommen sollte. Umgekehrt kann ein oben beschriebenes, aber bei einem nachstehenden Ausführungsbeispiel nicht vorhandenes Merkmal dem Ausführungsbeispiel hinzugefügt werden, wenn es bei einer bestimmten Anwendung auf den mit diesem Merkmal verknüpften technischen Effekt ankommen sollte.

Im Folgenden sind für Elemente, die einander hinsichtlich Struktur und/oder Funktion entsprechen, dieselben Bezugszeichen verwendet.

Es zeigen:
- Fig. 1: eine schematische Darstellung einer Vorrichtung zur Bearbeitung von Glasbehältern in einem ersten Betriebszustand;
- Fig. 2: eine schematische Darstellung der Vorrichtung der Fig. 1 in einem anderen Betriebszustand;
- Fig. 3: eine schematische Darstellung einer weiteren Vorrichtung zur Bearbeitung von Glasbehältern.

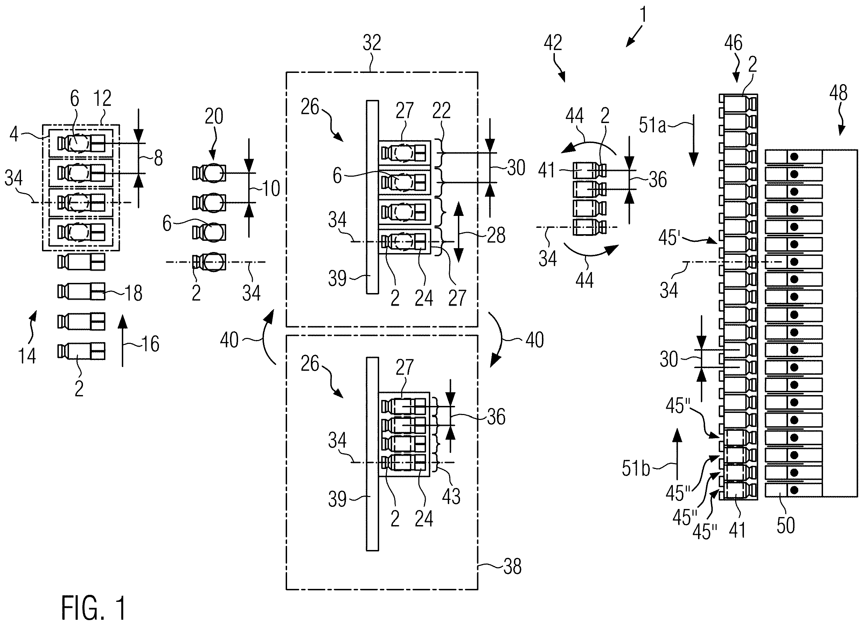

Zunächst sind Aufbau und Funktion einer Vorrichtung 1 zur Bearbeitung von Glasbehältern 2 anhand der Fig. 1 beschrieben. Bei den Glasbehältern 2 handelt es sich insbesondere um kleine Glasbehälter, wie sie beispielsweise in der pharmazeutischen Industrie verwendet werden. Beispiele für solche Glasbehälter sind Spritzen, Fläschchen, Karpulen oder Ampullen.

Die Vorrichtung 1 stellt Entnahmepositionen 4 bereit, an denen jeweils ein Glasbehälter 2 zur Aufnahme durch einen Aufnehmer 6 bereitgestellt wird. Ein Aufnehmer 6 wird jeweils zu einer Entnahmeposition 4 insbesondere automatisch verfahren. Dort nimmt er einen Glasbehälter 2 auf, um ihn einem weiteren Bearbeitungsschritt an einer von den Entnahmepositionen 4 beabstandeten Stelle zuzuführen. Die Aufnehmer 6 sind nur schematisch in Fig. 1 dargestellt. Sie sind bevorzugt ausgestaltet, jeweils nur einen einzigen Glasbehälter 2 aus einer Entnahmeposition 4 zu entnehmen.

Die Entnahmepositionen 4 sind bevorzugt benachbart zueinander und bevorzugt in einem konstanten Abstand 8 voneinander angeordnet. Der Abstand 8 zwischen den Entnahmepositionen 4 entspricht dabei einem Abstand 10 zwischen den Aufnehmern 6.

Die Entnahmepositionen 4 können Teil eines Zugriffsbereichs 12 sein, in den die Glasbehälter 2 durch ein Fördersystem 14, beispielsweise einen Transportgurt oder ein Förderband, in einer Förderrichtung 16 transportiert werden, und in dem die Aufnehmer 6 Zugriff auf die Glasbehälter 2 erlangen. Das Fördersystem 14 weist Behälteraufnahmen 18 auf, die jede bevorzugt nur einen einzigen Glasbehälter 2 in einer bestimmten Lage und Position relativ zur Behälteraufnahme 18 aufnimmt und fixiert.

Die Vorrichtung 1 weist eine Anzahl n von Entnahmepositionen 4 auf. In Fig. 1 beträgt die Anzahl n = 4, wobei natürlich auch mehr oder weniger Entnahmepositionen 4 vorhanden sein können. Die Anzahl n der Entnahmepositionen 4 entspricht der Anzahl n der Aufnehmer 6. Jeder Entnahmeposition 4 ist folglich ein Aufnehmer 6 zugeordnet. Beispielsweise kann ein Glasbehälter 2 in einer V-förmigen Behälteraufnahme 18 an seinem Hals bezüglich seiner Längsrichtung und in radialer Richtung in der Behälteraufnahme 18 von oben ablegbar und nach oben abnehmbar fixiert sein. Die Behälteraufnahmen 18 sind, sofern ein Fördersystem 14 vorhanden ist, Teil des Fördersystems 14.

Eine Entnahmeposition 4 ist jeweils einer sich im Zugriffsbereich 12 befindlichen Behälteraufnahme 18 zugeordnet.

Die Aufnehmer 6 sind Teil einer Aufnahmeeinrichtung 20, die in Teil eines Roboters, beispielsweise eines Mehrachs-Roboters oder eines Portalroboters, ausgestaltet sein kann. Die Aufnehmer 6 sind in einer Ausgestaltung insbesondere Teil eines Endeffektors des Roboters. In einer Ausgestaltung sind alle Aufnehmer 6 baulich vereint und abstandsunveränderlich zueinander angeordnet. Alle Abnehmer 6 verfahren gleichzeitig zu der ihnen jeweils zugeordneten Entnahmeposition 4 und nehmen gleichzeitig jeweils einen Glasbehälter 2 aus seiner Entnahmeposition 4 auf.

Die Aufnahmeeinrichtung 20 ist ausgestaltet, die Glasbehälter 2 von den Entnahmepositionen 4 zu beabstandet davon angeordneten Ablagepositionen 22 zu transportieren. In Fig. 1 ist dargestellt, wie von der Aufnahmeeinrichtung 20 gerade 4 von ihren Entnahmepositionen 4 bzw. Behälteraufnahmen 18 entnommene Glasbehälter 2 zu den Ablagepositionen 22 verfahren werden.

Die Ablagepositionen 22 können von Pufferaufnahmen 24 einer Puffereinrichtung 26 gebildet sein. Die Pufferaufnahmen 24 fixieren, wie die Behälteraufnahmen 18, jeweils einen Glasbehälter 2 hinsichtlich seiner Position in Längs- und Radialrichtung. Als Pufferaufnahmen 24 können hier prismen- oder V-förmige Auflagen, in denen der Hals und/oder ein Behälterkörper eingelegt werden, zum Einsatz kommen.

Bevorzugt sind n Pufferaufnahmen 24 - also genau so viele Pufferaufnahmen 24 wie Abnehmer 6 - vorhanden. Auf diese Weise kann jeder Aufnehmer 6, der einen Glasbehälter 2 trägt, seinen Glasbehälter 2 in einer Pufferaufnahme 24 ablegen. Weil n = 4 Aufnehmer 6 vorhanden sind, sind bei dem Ausführungsbeispiel der Fig. 1 auch n = 4 Pufferaufnahmen 24 vorhanden. Natürlich können auch mehr als n, beispielsweise ein ganzzahliges Vielfaches von n Pufferaufnahmen 24 vorhanden sein.

Von den n Pufferaufnahmen 24 sind wenigstens n - 1 Pufferaufnahmen 24 unabhängig voneinander in einer Verfahrrichtung 28 verfahrbar. Hierzu können entsprechende Motor- und Steuereinrichtungen von der Puffereinrichtung 24 umfasst sein, die in Fig. 1 der Einfachheit halber nicht dargestellt sind. Jede der unabhängig voneinander verfahrbaren Pufferaufnahmen 24 kann beispielsweise auf einem unabhängig verfahrbaren Schlitten 27 angeordnet sein. Die Schlitten können Teil eines Multi-Carrier-Systems sein.

Aufgrund der unabhängigen Verfahrbarkeit der Pufferaufnahmen 24 kann ein Abstand 30 zwischen den Pufferaufnahmen 24 beliebig (im Rahmen der maximalen Verfahrbarkeit) verändert werden.

In Fig. 1 ist die Puffereinrichtung in zwei verschiedenen Stellungen gezeigt, in die sie überführt werden kann. So entspricht beispielsweise der Abstand 30 der Pufferaufnahmen 24 voneinander in einer Pufferbestückungsstellung 32 dem Abstand 10 zwischen den Aufnehmern 6 bzw. den Abstand 8 zwischen den Entnahmepositionen 4. Dies ist insbesondere dann sinnvoll, wenn der Abstand 10 zwischen den Aufnehmern 6 unveränderlich ist.

Die Orientierung der Pufferaufnahmen 24 kann der Orientierung der Behälteraufnahmen 18 entsprechen. In den Behälteraufnahmen 18 und den Pufferaufnahmen 24 sind also die Längsachsen 34 der Glasbehälter 2 parallel zueinander ausgerichtet. Die Glasbehälter 2 können ihre Orientierung, die sie in den Entnahmepositionen 4 hatten, auch in den Aufnehmern 6 und in den Pufferaufnahmen 24 beibehalten.

Je nach Ausgestaltung des Endeffektors können die Aufnehmer 6 auch relativ zueinander drehbar und/oder relativ zueinander abstandsveränderlich ausgestaltet sein. Entsprechend ist dann die Ausrichtung der Pufferaufnahmen 24 und deren Abstand 30 an den Abstand der Aufnehmer 6 angepasst. So muss nicht, wie in Fig. 1 dargestellt, die Verfahrrichtung 28 senkrecht zu den Längsachsen 34 der Glasbehälter 2 verlaufen. Die Pufferaufnahmen 24 können (nicht gezeigt) auch so ausgerichtet sein, dass die Längsachsen 34 der darin aufgenommenen Glasbehälter 2 parallel zur Verfahrrichtung 28 verlaufen. Konstruktiv einfacher ist jedoch die in Fig. 1 dargestellte Ausgestaltung, bei der die Abstände 8, 10 und 30 sowie die Ausrichtung der Längsachsen 34 in den Behälteraufnahmen 18, den Aufnehmern 6 und den Pufferaufnahmen 24 gleich ist.

Es kann notwendig sein, dass für einen der Pufferaufnahme 24 nachgeschalteten Bearbeitungsschritt die Glasbehälter 2 in einem anderen - kleineren oder größeren - Abstand 36 voneinander angeordnet sein müssen als in der Pufferbestückungsstellung 32. Folglich ist die Puffereinrichtung 26 von der Pufferbestückungsstellung 32 in eine Pufferentnahmestellung 38 überführbar. In der Pufferentnahmestellung 38 sind die Glasbehälter 2 in den Pufferaufnahmen 24 in einem größeren oder kleineren Abstand 36 als in der Pufferbestückungsstellung 32 angeordnet.

Wie oben bereits erwähnt ist, reicht es aus, wenn von den n Pufferaufnahmen 24 nur n - 1 Pufferaufnahmen 24 unabhängig voneinander verfahrbar sind. Eine Pufferaufnahme 24a, beispielsweise eine außenliegende Pufferaufnahme, kann ortsfest zu einem Gestell 39 der Puffereinrichtung ausgestaltet und somit nicht verfahrbar sein.

In Fig. 1 sind die Pufferbestückungsstellung 32 und die Pufferentnahmestellung 38 zur Verdeutlichung untereinander dargestellt. Dies bedeutet nicht, dass die Vorrichtung 1 zwei Puffereinrichtungen 26 aufweist. Die Darstellung soll lediglich verdeutlichen, dass eine Puffereinrichtung 26 alternativ, insbesondere alternierend, wie durch die Pfeile 40 dargestellt ist, eine Pufferbestückungsstellung 32 oder eine Pufferentnahmestellung 38 einnimmt.

Die Vorrichtung 1 kann ferner Halter 41 bzw. ein Übergabesystem 42 mit solchen Haltern 41 aufweisen, die ausgestaltet sind, automatisch die Glasbehälter 2 aus den Pufferaufnahmen 24 zu entnehmen und einem weiteren, von den Pufferaufnahmen 24 beabstandeten Bearbeitungsschritt zuzuführen.

Die Halter 41 verfahren automatisch und sind bevorzugt Teil eines weiteren Roboters (nicht dargestellt), beispielsweise eines Mehrachsen-Roboters oder eines Portalroboters. Die Halter 41 können insbesondere Teil eines insbesondere austauschbaren Endeffektors eines solchen Roboters sein.

In der Pufferentnahmestellung 38 befinden sich die Pufferaufnahmen 24 in Aufnahmepositionen 43, wobei jedem Halter 41 eine Aufnahmeposition 43 zugeordnet ist. Bevorzugt sind demnach genauso viele Halter 41 wie Pufferaufnahmen 24 vorgesehen. Insbesondere ist eine Anzahl n von Haltern 41 - beispielsweise wie dargestellt vier - vorhanden. Allerdings können auch mehr oder weniger viele Halter 41 vorgesehen sein. Sind weniger Halter 41 als Pufferaufnahmen 24 vorgesehen, so sollte die Anzahl der Pufferaufnahmen 24 ein ganzzahliges Vielfaches der Anzahl der Halter 41 sein.

Das Übergabesystem 42 kann ausgestaltet sein, die Orientierung bzw. Ausrichtung der Glasbehälter 2 während des Transports zu ändern, beispielsweise, indem alle Halter 41 einzeln oder gemeinsam um eine zur Längsachse 34 der Glasbehälter 2 senkrechte und beispielsweise auch vertikale Achse gedreht werden, wie die durch den Pfeil 44 angedeutet ist.

In dem weiteren Bearbeitungsschritt können die der Puffereinrichtung 26 entnommenen Glasbehälter 2 beispielsweise einem weiteren Fördersystem (nicht gezeigt) zugeführt werden, das die Glasbehälter 2 zum nächsten Bearbeitungsschritt transportiert.

In dem den Pufferaufnahmen 24 folgenden Bearbeitungsschritt kann auch eine Sammeleinrichtung 46 als optionaler Teil der Vorrichtung 1 bereitgestellt sein, in der eine Anzahl I von Sammelaufnahmen 45 vorhanden sein kann. Auch hier kann in jeder Sammelaufnahme 45 bevorzugt nur ein einziger Glasbehälter 2 abgelegt werden.

Vorteilhaft ist l größer als n. In der Sammeleinrichtung 46 kann also eine große Anzahl von Glasbehältern 2 gesammelt werden, um diese dann chargenweise weiterzuverarbeiten, beispielsweise zur Verpackung, Beschichtung etc. Die gesamte Sammeleinrichtung 46 kann hierzu verfahrbar, aber auch stationär sein.

Bei einer stationären Sammeleinrichtung 46 kann die Vorrichtung 1 ein Transfersystem 48 aufweisen, das die Glasbehälter 2 den Sammelaufnahmen 45 entnimmt und einem weiteren Bearbeitungsschritt zuführt. Das Transfersystem 48 kann beispielsweise eine Anzahl p von Glasbehältern 2 von der Sammeleinrichtung 46 gleichzeitig entnehmen und transportieren. Entsprechend kann das Transfersystem 48 eine Anzahl p von Greifern 50 aufweisen. Jeder Greifer 50 ist vorzugsweise ausgestaltet, nur einen Glasbehälter 2 aufzunehmen.

Die Anzahl p der Greifer 50 ist kleiner als I; sie kann ein ganzzahliges Vielfaches der Anzahl der Halter 41 sein. Unabhängig davon kann die die Differenz I - p der Anzahl n - 1 bzw. der um eins verminderten Anzahl der Halter 41 entsprechen. Letzteres bedeutet, dass ausreichend Sammelaufnahmen 45 vorhanden sind, wenn gerade p - 1 Sammelaufnahmen mit Glasbehältern 2 befüllt sind und von den Haltern 41 n weitere Glasbehälter 2 ankommen.

In Fig. 1 ist lediglich zu Beispielzwecken p=20 und l=23.

Die Bestückung der Sammelaufnahmen 45 mit Glasbehälter 2 kann in einer Befüllungsrichtung 51a erfolgen, während die Entnahme der Glasbehälter 2 in der entgegengesetzten Entnahmerichtung 51b stattfindet. Dies ist im Folgenden kurz erläutert.

Zunächst werden die Glasbehälter vom Übergabesystem 42 ausgehend von dem einen Ende der Sammelaufnahmen 45, in Fig. 1 ist das das obere Ende, nebeneinander abgelegt. Die Reihe der sich in den Sammelbehältern 45 befindlichen Glasbehälter 2 wird also in der Befüllungsrichtung 51a länger.

In Fig. 1 ist gezeigt, wie die vier letzten, hier untersten, Sammelaufnahmen 45' von den Haltern 41 gerade mit Glasbehältern 2 bestückt werden, so dass sich nunmehr, insbesondere erstmalig, p oder mehr als p Glasbehälter 2 in den Sammelaufnahmen 45 befinden.

Sobald sich wenigstens p Glasbehälter 2 in den Sammelaufnahmen 45 befinden, entnimmt das Transfersystem 48 genau p Glasbehälter. Dabei werden die p Glasbehälter bevorzugt von demjenigen Ende der Reihe der Glasbehälter entnommen, an dem zuletzt die Glasbehälter abgelegt wurden. Dieses Ende ist dem Ende, von dem aus die Reihe aufgebaut wurde, gegenüberliegend.

Das Transfersystem 48 kann von einem Roboter (nicht dargestellt) gebildet sein, wobei auch hier ein Mehrachs-Roboter oder ein Portalroboter zum Einsatz kommen kann. Die Greifer 50 können Teil eines insbesondere austauschbaren Endeffektors dieses Roboters sein. So kann beispielsweise die Anzahl p durch Austausch oder Umbau des Endeffektors angepasst werden.

Die Aufnehmer 6, Halter 41 und Greifer 50 können jeweils unabhängig voneinander Sauger, Greifzangen, in die Glasbehälter 2 einführbare Stangen und/oder andere Elemente aufweisen, mit denen ein Glasbehälter 2 von einer Aufnahme entnommen, transportiert und auf einer Aufnahme wieder abgelegt werden kann.

Die Halter 41 und/oder die Greifer 50 können abstandsveränderlich sein, bevorzugt sind sie jedoch im Abstand 36 angeordnet, so dass in den Haltern 41 die Glasbehälter 2 genauso weit voneinander beabstandet sind, wie in der Pufferentnahmestellung 38. Die Greifer 50 können gemeinsam und/oder einzeln drehbar sein, um die Ausrichtung der Glasbehälter 2 zu ändern. Auf diese Weise können die Glasbehälter 2 von den Greifern 50 in einer anderen Ausrichtung abgelegt werden, als sie aufgenommen werden.

Die Aufnehmer 6, Halter 41 und Greifer 50 müssen jedoch nicht abstandveränderlich sein, denn eine Abstandsanpassung erfolgt bevorzugt in der Puffereinrichtung 26.

Der Abstand 36 entspricht somit bevorzugt dem Abstand, den die Glasbehälter 2 im nachgeschalteten Bearbeitungsschritt, beispielsweise in der Sammeleinrichtung 46, aufweisen. Die Halter 41 können gemeinsam oder einzeln drehbar sein, so dass die Orientierung der Glasbehälter 2 an die im nachgeschalteten Bearbeitungsschritt erforderliche Orientierung angepasst werden kann. Die Orientierung der Längsachsen 34 der Glasbehälter 2 spielt keine Rolle. Weisen beispielsweise die Glasbehälter 2 in den Entnahmepositionen 4 nicht, wie in Fig. 1, parallel zueinander verlaufende Längsachsen 34, sondern miteinander beispielsweise in der Förderrichtung 16 fluchtende Längsachsen 34 auf, so können einfach die Pufferaufnahmen 24 ebenfalls nicht mit parallel zueinander ausgerichteten Längsachsen 34, sondern ebenfalls mit fluchtenden Längsachsen 34 ausgestaltet sein. Wie oben beschrieben kann dann eine Drehung der Längsachsen 34 in den Haltern 41 erfolgen. Alternativ kann eine Drehung der Längsachsen auch durch drehbare Aufnehmer 6 erfolgen.

Bei der Ausgestaltung der Fig. 1 werden alle Halter 41 beispielsweise gemeinsam um eine Achse gedreht, die senkrecht zu der Ebene liegt, in der die Glasbehälter 2 in den Haltern 41 angeordnet sind. Dadurch ändert sich die Orientierung der Glasbehälter 2 in den Haltern 41 bzw. im weiteren Transfersystem 48 um 180°. Alternativ kann selbstverständlich auch jeder Halter 41 so gedreht werden, dass die Längsachsen 34 der Glasbehälter 2 in den Haltern 41 um 90° oder 270° drehen.

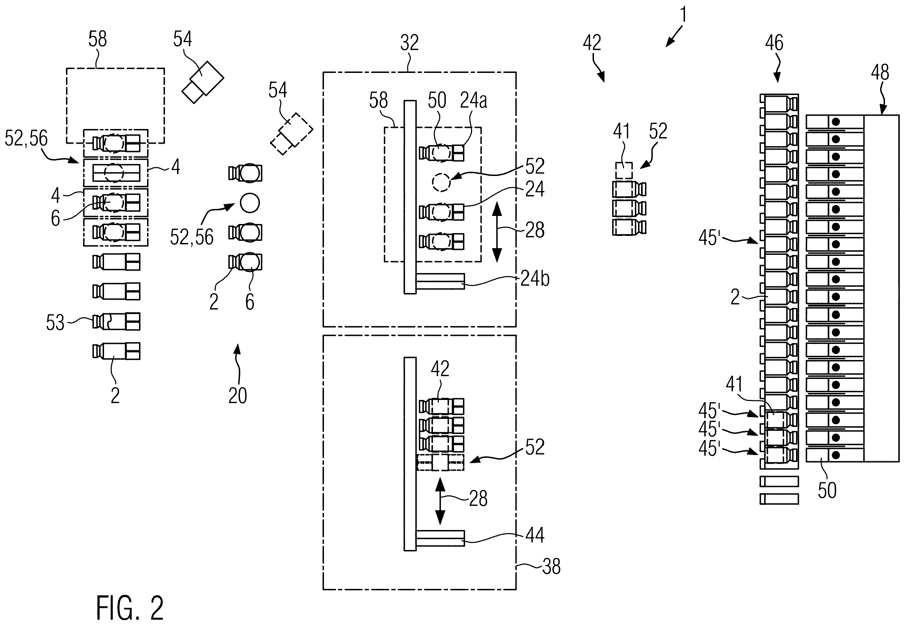

Anhand der Fig. 2 ist nun erläutert, wie die Vorrichtung 1 der Fig. 1 verwendet werden kann, um eine oder mehrere Leerstellen 52 und/oder Ausschuss 53 im Produktstrom der Glasbehälter 2 zu eliminieren und somit den Produktstrom zu verdichten. Eine Leerstelle 52 kann beispielsweise auftreten, wenn in einem vorgeschalteten Herstellungs- oder Bearbeitungsschritt ein Glasbehälter 2 zerbricht. Ausschuss 53 entsteht, wenn ein Glasbehälter 2 nicht die erforderliche Maßhaltigkeit oder Materialqualität aufweist.

Während der Produktstrom an den Entnahmepositionen 4 noch Leerstellen 52 und/oder Ausschuss 53 enthält, sind diese in der Sammeleinrichtung 46 oder einer anderen Vorrichtung an dieser Stelle nicht mehr vorhanden, denn dort liegen alle von den Haltern 41 abgelegten Glasbehälter 2 unmittelbar nebeneinander.

Die Vorrichtung 1 ist bevorzugt ausgestaltet, die Position einer Leerstelle 52 und von Ausschuss 53 im Förderstrom zu speichern und zu verfolgen. Die Entstehung von Ausschuss 53 und Leerstellen 52 folgt Zufallsprozessen. Es können beispielsweise über längere Zeiten keine Leerstellen 52 und/oder kein Ausschuss 53 auftreten, während zu anderen Zeitpunkten Ausschuss 53 und/oder Leerstellen 52 gehäuft auftreten. Der Abstand zwischen aufeinanderfolgenden Leerstellen 52 und/oder Ausschuss 53 ist zufällig verteilt.

In Fig. 2 ist zu Anschauungszwecken eine Leerstelle 52 an einer Entnahmeposition 4 gezeigt. Entsprechend der Zufallsverteilung der Leerstellen 52 können sich zu einem beliebigen Zeitpunkt weniger (beispielsweise keine Leerstellen 52, vgl. Fig. 1) oder mehr Leerstellen 52 an den Entnahmepositionen 4 befinden.

Die Vorrichtung 1 kann einen Leerstellendetektor 54 aufweisen, der ausgestaltet ist, die Position einer Leerstelle 52 in dem Fördersystem 14 und/oder in der Aufnahmeeinrichtung 20 zu erfassen. Der Leerstellendetektor 54 kann ferner ausgestaltet sein, auch die Position von Ausschuss 53 in dem Fördersystem 14 und/oder in der Aufnahmeeinrichtung 20 zu erfassen. Der Leerstellendetektor 54 kann beispielsweise als eine oder mehrere Kameras und/oder Prüfgeräte ausgestaltet sein. Er kann auch zumindest teilweise in einen Aufnehmer 6 bzw. die Aufnahmeeinrichtung 20 integriert sein. Beispielsweise kann ein Aufnehmer 6 oder die Aufnahmeeinrichtung 20 ausgestaltet sein, einen leeren Aufnehmer 6 während des Transfers von Glasbehältern 2 von den Entnahmepositionen 4 zu den Ablagepositionen 22 zu erfassen. Beispielsweise kann bei einem als Sauger ausgestalteten Aufnehmer 6 der Saugdruck überwacht werden.

Sind von den n Entnahmepositionen 4 nur m Entnahmepositionen mit Glasbehältern 2 belegt, der Rest n - m jedoch mit Leerstellen 52, so werden durch die n Aufnehmer 6 nur m Glasbehälter 2 aufgenommen. In Fig. 1 ist exemplarisch nur eine Leerstelle 52 gezeigt, so dass n - m eins beträgt. Entsprechend werden durch die vier Aufnehmer 6 nur drei Glasbehälter 2 aufgenommen. Welcher der Aufnehmer 6 keinen Glasbehälter 2, also die Leerstelle 52 aufweist, ist dabei unerheblich.

Im dargestellten Fall werden nur m Pufferaufnahmen 24 in der Pufferbestückungsstellung 32 auf unmittelbar nebeneinanderliegende Ablagepositionen 22 verfahren. Eine Anzahl n - m von Pufferaufnahmen 24b wird jenseits der Ablagepositionen 22 verfahren, so dass sämtliche Ablagepositionen 22 an einer Seite dieser Pufferaufnahme 24b liegen. Die übrigen m Pufferaufnahmen 24 werden automatisch in die Ablagepositionen 22 gefahren, die denjenigen Aufnehmern 6 zugeordnet sind, in denen sich Glasbehälter 2 befinden. Die m Pufferaufnahmen 24 an den m Ablagepositionen 22 liegen also unmittelbar nebeneinander. Falls ein stationäre Pufferaufnahme 24a vorhanden ist, bliebt diese an ihrem Platz und die übrigen Pufferaufnahmen 24 richten sich relativ zu der stationären Pufferaufnahme 24a aus.

Nach Ablage der m Glasbehälter 2 von den Aufnehmern 6 auf die Pufferaufnahmen 24 befinden sich folglich die m Glasbehälter 2 auf unmittelbar aufeinander folgenden Pufferaufnahmen 24.

Die (hier einzige) Leerstelle 52 befindet sich in Fig. 2 an der Position 56, hier die zweite Position von oben. An dieser Stelle wird von der Puffereinrichtung 26 keine Pufferaufnahme 24 bereitgestellt.

Anschließend werden automatisch die Pufferaufnahmen 24 von der Pufferbestückungsstellung 32 in die Pufferentnahmestellung 38 gefahren. Die Lage der n - m Pufferaufnahmen 24 in der Pufferentnahmestellung 38 ist unerheblich, so lange die mit Glasbehältern 2 bestückten Pufferaufnahmen 24 unmittelbar nebeneinanderliegen. Um die Prozesssteuerung einfach zu halten, können die n - m Pufferbehälter in der Pufferentnahmestellung 38 auch im Falle von Leerstellen 52 an dieselbe Stelle gefahren werden, in der sie sich bei nicht vorhandenen Leerstellen 52 (vgl. Fig. 1) auch befinden würden.

In der Pufferentnahmestellung 38 werden die m Glasbehälter 2 von m unmittelbar nebeneinanderliegenden Haltern 41 aufgenommen und, ebenfalls unmittelbar nebeneinanderliegend, in m der p Sammelaufnahmen 45 abgelegt. Die Ablage auf den Sammelaufnahmen 45 erfolgt dabei, wie schon bei Fig. 1, unmittelbar neben den bereits dort abgelegten Glasbehältern 2. Die Befüllung der Sammelaufnahmen 45 findet dabei, wie oben beschrieben, in stets gleicher Richtung statt.

Sobald nach einer Bestückung durch die m Halter sich p Glasbehälter in den Sammelaufnahmen befinden, werden p Glasbehälter ausgehend von den zuletzt bestückten Sammelaufnahmen 45' abgenommen, wie bereits bei Fig. 1 erläutert wurde. Aufgrund eventueller Leerstellen und/oder Ausschusses kann die Lage der zuletzt bestückten Sammelaufnahmen 45' zwischen p und (p+n-1) ausgehend von der zuerst bestückten Sammelaufnahme 45 variieren. Das Übergabesystem 48 ist daher bevorzugt ausgestaltet, die Greifer 50 bei der Aufnahme der Glasbehälter 2 so zu positionieren, dass das die letzte mit einem Glasbehälter 2 bestückte Sammelaufnahme 45`, an der die Reihe der bestückten Sammelaufnahmen 45 endet, mit dem letzten Greifer der Reihe von Greifern 50 übereinstimmt.

Weisen die Entnahmepositionen 4 in Abweichung von Fig. 2 zwei Leerstellen 52 auf, so werden entsprechend zwei Pufferaufnahmen 24b an Positionen jenseits der Ablagepositionen 22 verfahren, so dass auch hier sämtliche Glasbehälter 2 in den Aufnehmern 6 unabhängig von der Position eventueller Leerstellen 52 auf unmittelbar aufeinanderfolgenden Pufferaufnahmen 24 abgelegt werden.

Durch die unabhängige Verfahrbarkeit der Pufferaufnahmen 24 voneinander können also an dieser Stelle die Leerstellen 52 im Produktstrom eliminiert werden. Im nachfolgenden Bearbeitungsschritt, beispielsweise der Sammelaufnahme 45, liegen sämtliche Glasbehälter 2 wieder unmittelbar nebeneinander.

Befindet sich Ausschuss 53 an einer Entnahmeposition 4, so kann wie folgt verfahren werden.

Gemäß einer Variante kann derjenige Aufnehmer 6, der der Entnahmeposition 4 zugeordnet ist, an der sich der Ausschuss 53 befindet, den Ausschuss 53 nicht aufnehmen. Anstelle des Ausschusses 53 befindet sich also in der Aufnahmeeinrichtung 20 am entsprechenden Aufnehmer 6 eine Leerstelle 52. Der Ausschuss 53 verbleibt in der Behälteraufnahme 18 und kann beispielsweise zu einem Ausschusssammelbehälter 58 gefördert und so aus dem Produktstrom aussortiert werden. Gemäß einer anderen Variante kann der Ausschuss 53 auch vom entsprechenden Aufnehmer 6 aufgenommen werden. In diesem Fall wird der Ausschuss 53 wie eine Leerstelle 52 behandelt: Dort wo sich der Ausschuss 53 befindet, wird keine Pufferaufnahme 24 bereitgestellt. Zur Ablage lässt der Aufnehmer 6 den Ausschuss 53 einfach fallen, so dass er in einen an der Puffereinrichtung 26 bereitgestellten Ausschusssammelbehälter 58 fällt und somit ebenfalls aus dem Produktstrom entfernt ist.

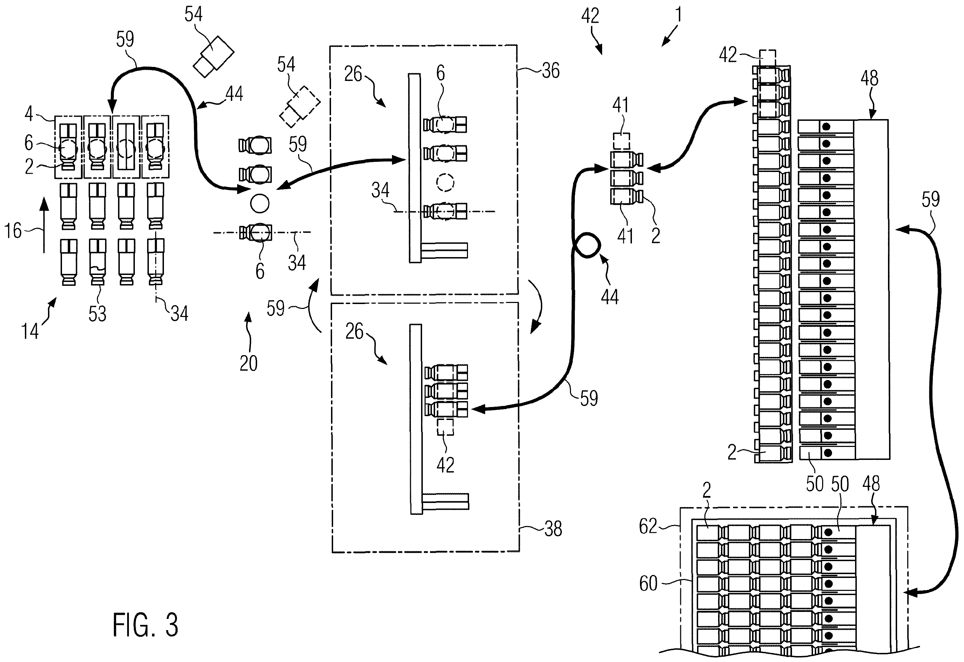

In Fig. 3 ist eine weitere Ausgestaltung einer Vorrichtung 1 gezeigt, wobei im Folgenden lediglich auf die Unterschiede zu der Vorrichtung 1 der Fig. 1 und 2 eingegangen ist. In der Vorrichtung 1 der Fig. 2 sind die Entnahmepositionen 4 nicht in einer Reihe nebeneinander oder - gleichbedeutend - hintereinander, sondern in einem Feld flächig angeordnet. Entsprechend sind die Aufnehmer 6 zumindest bei der Entnahme der Glasbehälter 2 aus den Entnahmepositionen 4 ebenfalls in einem Feld angeordnet. Während des Transports der Glasbehälter 2 in den Aufnehmern 6 werden die Aufnehmer 6 zumindest abschnittsweise relativ zueinander bewegt, so das zur Ablage auf den Pufferaufnahmen 24 die Aufnehmer 6 wieder wie in den Fig. 1 und 2 einreihig nebeneinanderliegen. Im Weiteren werden die Glasbehälter 2 wie bei Fig. 1 und 2 beschrieben gehandhabt. Durch eine entsprechende Ausgestaltung der Aufnehmer 6 bzw. der Aufnahmeeinrichtung 20 lassen sich also auch gleichzeitig hinter und nebeneinander angeordnete Entnahmepositionen 4 bedienen. Bei Ausschuss 53 und Leerstellen 52 wird so verfahren wie in Fig. 2 gezeigt.

In Fig. 3 ist schließlich noch eine Verpackung 60 dargestellt, in der die Glasbehälter 2 durch das weitere Transfersystem 48 transportiert werden können. Die Anzahl der Greifer 50 und deren Anordnung zueinander kann an die Erfordernisse der Verpackung 60 angepasst werden. Dies kann dadurch erfolgen, dass einzelne Greifer 50 deaktiviert oder die Abstände zwischen den Greifern 50 verändert werden, oder der Endeffektor am Transfersystem 48 ausgetauscht wird. Die Verpackung 60 kann in einer Verpackungsstation 62, die Teil der Vorrichtung 1 sein kann, zusammen mit weiteren Verpackungen 60 bereitgestellt werden.

Die Bewegungen von Fördersystem 14, Aufnahmeeinrichtung 20, Puffereinrichtung 26, Übergabesystem 42, Puffereinrichtung 26 und Transfersystem 48, in Fig. 3 durch die Pfeile 59 angedeutet, sind synchronisiert. So findet bevorzugt die Bewegung der Aufnehmer 6 von den Entnahmepositionen 4 zu den Pufferaufnahmen 24 in der Pufferbestückungsstellung 32 und zurück innerhalb eines Arbeitstaktes statt. Ebenso findet die Bewegung von der Pufferentnahmestellung 38 in die Pufferbestückungsstellung 32 innerhalb eines Arbeitstaktes statt, wobei die Pufferbestückungsstellung 32 bereits erreicht ist, wenn die Aufnehmer 6 sich an den Ablagepositionen 22 befinden. Die Bewegung der Halter 41 von den Pufferaufnahmen 24 in der Pufferentnahmestellung 38 zu den Sammelaufnahmen 45 und zurück findet ebenfalls in einem Arbeitstakt statt. Das Abnehmen der p Glasbehälter 2 aus den Sammelaufnahmen 45 findet ebenfalls während eines Arbeitstaktes statt. Die Länge des Arbeitstaktes bestimmt sich nach der Zeit, die das Fördersystem 14 benötigt, sich um die Anzahl n von Entnahmepositionen 4 weiterzubewegen, also n neue Glasbehälter 2 zur Verfügung zu stellen. Das Fördersystem 14 kann intermittierend angetrieben sein. Beispielsweise kann eine Bewegung in Förderrichtung 16 angehalten sein, wenn die Aufnehmer 6 auf die Entnahmepositionen 4 zugreifen.

### Bezugszeichen

- 1: Vorrichtung
- 2: Glasbehälter
- 4: Entnahmeposition
- 6: Aufnehmer
- 8: Abstand zwischen Entnahmepositionen
- 10: Abstand zwischen Aufnehmern
- 12: Zugriffsbereich
- 14: Fördersystem
- 16: Förderrichtung
- 18: Behälteraufnahme
- 20: Aufnahmeeinrichtung
- 22: Ablageposition
- 24: Pufferaufnahme
- 24a: stationäre Pufferaufnahme
- 24b: Pufferaufnahme jenseits der Ablagepositionen
- 26: Puffereinrichtung
- 27: Schlitten
- 28: Verfahrrichtung
- 30: Abstand zwischen Pufferaufnahmen in der Pufferbestückungsstellung
- 32: Pufferbestückungsstellung
- 34: Längsachse der Glasbehälter
- 36: Abstand zwischen den Pufferaufnahmen in der Pufferentnahmestellung
- 38: Pufferentnahmestellung
- 39: Gestell der Puffereinrichtung
- 40: Alternieren zwischen Pufferbestückungsstellung und Pufferentnahmestellung
- 41: Halter
- 42: Übergabesystem
- 43: Aufnahmeposition
- 44: Änderung der Ausrichtung der Glasbehälter
- 45: Sammelaufnahme
- 46: Sammeleinrichtung
- 48: Transfersystem
- 50: Greifer
- 51a: Befüllungsrichtung
- 51b: Entnahmerichtung
- 52: Leerstelle
- 53: Ausschuss
- 54: Leerstellendetektor
- 56: Position der Leerstelle
- 58: Ausschusssammelbehälter
- 59: Bewegungen
- 60: Verpackung
- 62: Verpackungsstation
- n: Anzahl der Entnahmepositionen
- I: Anzahl von Sammelaufnahmen
- p: Anzahl von Greifern

## Patentansprüche

1. Verfahren zur Handhabung von Glasbehältern (2), beispielsweise Spritzen, Fläschchen, Karpulen oder Ampullen, umfassend die folgenden Schritte:
- Bereitstellen einer Anzahl m von Glasbehältern (2) an einer vorbestimmten Anzahl n von Entnahmepositionen (4),
wobei an jeder der n Entnahmepositionen (4) höchstens ein Glasbehälter (2) bereitgestellt ist,
wobei die n Entnahmepositionen eine zufällige Anzahl von n-m Leerstellen (52) und/oder Ausschuss (53) enthaltenden Entnahmepositionen (4) aufweisen und
wobei m kleiner oder gleich n ist;
- Entnehmen der m Glasbehälter (2) aus den n Entnahmepositionen (4) mittels einer Anzahl n von Aufnehmern (6);
- Bestimmen der Anzahl und/oder Position der eine Leerstelle (52) und/oder Ausschuss (53) enthaltenden Entnahmepositionen (4) und/oder Aufnehmer (6);
- Bereitstellen einer Anzahl m von unmittelbar nebeneinanderliegender Pufferaufnahmen (24) aus einer Anzahl von insgesamt wenigstens n Pufferaufnahmen;
- Ablegen der m Glasbehälter (2) aus den Aufnehmern (6) auf den m unmittelbar nebeneinanderliegenden, von den Entnahmepositionen (4) beabstandet angeordneten Pufferaufnahmen (24).

2. Verfahren nach Anspruch 1, wobei jede Entnahmeposition (4) von einer einen Glasbehälter (2) aufnehmenden, beweglichen Behälteraufnahme (18) gebildet ist und das Verfahren ferner die folgenden Verfahrensschritte aufweist:
- Bewegen der Behälteraufnahmen (18) in die Entnahmepositionen (4); und
- Entnahme der Glasbehälter (2) aus den Behälteraufnahmen (18), wenn sich die Behälteraufnahmen (18) an den Entnahmepositionen (4) befinden.

3. Verfahren nach Anspruch 1 oder 2, ferner umfassend den folgenden Verfahrensschritt:
- Verfahren der m unmittelbar nebeneinanderliegenden Pufferaufnahmen (24) in Ablagepositionen (22), zu denen sich die m Glasbehälter (2) aufweisenden Aufnehmer (6) bewegen.

4. Verfahren nach einem der Ansprüche 1 bis 3, ferner umfassend den folgenden Verfahrensschritt:
- Verfahren der m unmittelbar nebeneinanderliegenden Pufferaufnahmen (24) aus Ablagepositionen (22) in Aufnahmepositionen (43) nach der Ablage der m Glasbehälter (2) auf den Pufferaufnahmen (24).

5. Verfahren nach einem der Ansprüche 1 bis 4, ferner umfassend den folgenden Verfahrensschritt:
- Entnehmen der m Glasbehälter (2) aus den m unmittelbar nebeneinanderliegenden Pufferaufnahmen (24);
- Ablegen der m aus den Pufferaufnahmen (24) entnommenen Glasbehälter (2) in einer Sammeleinrichtung (46) unmittelbar neben zuvor den Pufferaufnahmen (24) entnommenen Glasbehältern (2).

6. Verfahren nach Anspruch 5, ferner umfassend den folgenden Verfahrensschritt:
- Entnehmen einer Anzahl von p Glasbehältern (2) aus der Sammeleinrichtung (46) im Abstand (36) der Aufnahmepositionen (43), wobei p größer als m ist.

7. Verfahren nach Anspruch 6, ferner umfassend den folgenden Verfahrensschritt:
- gleichzeitiges Entnehmen der Anzahl von p Glasbehältern (2) aus der Sammeleinrichtung (46), sobald eine Anzahl von p Glasbehältern (2) in der Sammeleinrichtung (46) abgelegt worden ist.

8. Verfahren nach Anspruch 4 und einem der Ansprüche 5 bis 7, ferner umfassend den folgenden Verfahrensschritt:
- Verfahren der m unmittelbar nebeneinanderliegenden Pufferaufnahmen (24) nach Ablage der m Glasbehälter (2) auf einen Abstand (36), der dem Abstand (36) der Glasbehälter (2) in der Sammeleinrichtung (46) entspricht.

9. Verfahren nach einem der Ansprüche 1 bis 8, ferner umfassend den folgenden Verfahrensschritt:
- Ändern der Ausrichtung einer Längsachse (34) der Glasbehälter (2) zwischen der Entnahme aus den Behälteraufnahmen (18) und der Ablage in den Pufferaufnahmen (24).

10. Vorrichtung (1) zur Handhabung von Glasbehältern wie Spritzen, Fläschchen, Karpulen oder Ampullen,
- mit einer Anzahl von n Entnahmepositionen (4), an denen jeweils ein Glasbehälter (2) zur Entnahme aus einer Entnahmeposition (4) bereitstellbar ist, wobei in den n Entnahmepositionen (4) zufällig verteilt eine Anzahl von n-m eine Leerstelle (52) und/oder Ausschuss aufweisenden Entnahmepositionen (4) enthalten ist;
- mit einer Anzahl von wenigstens n beweglichen Pufferaufnahmen (24), die von den Entnahmepositionen (4) beabstandet sind;
- mit einer Anzahl von wenigstens n Aufnehmern (6), die jeweils ausgestaltet sind, einen Glasbehälter (2) aus einer Entnahmepositionen (4) zu entnehmen, zu den Pufferaufnahmen (24) zu bewegen und auf den Pufferaufnahmen (24) abzulegen;
- wobei wenigstens n-1 der n Pufferaufnahmen (24) unabhängig voneinander in unterschiedlichen Abstand (30, 36) zueinander verfahrbar ausgestaltet sind.

11. Vorrichtung (1) nach Anspruch 10,
- wobei die Vorrichtung (1) einen Leerstellendetektor (54) aufweist, der ausgestaltet ist, im Betrieb eine Anzahl und/oder Position derjenigen Entnahmepositionen (4) und/oder Aufnehmer (6) zu bestimmen, in denen sich kein Glasbehälter (2) und/oder Ausschuss (53) befindet.

12. Vorrichtung (1) nach Anspruch 10 oder 11,
- wobei sich die von den wenigstens n Aufnehmern (6) abgelegten Glasbehälter (2) in unmittelbar nebeneinanderliegenden Pufferaufnahmen (24) befinden.

13. Vorrichtung (1) nach einem der Ansprüche 10 bis 12
- wobei die Vorrichtung (1) ein Fördersystem (14) mit wenigstens n jeweils in eine Entnahmeposition (4) beweglichen Behälteraufnahmen (18) aufweist, in denen jeweils ein Glasbehälter (2) ablegbar ist.

14. Vorrichtung (1) nach einem der Ansprüche 10 bis 13
- wobei die Vorrichtung (1) eine von den Pufferaufnahmen (24) und den Entnahmepositionen (4) beabstandete Sammeleinrichtung (46) und
- ein Übergabesystem (42) aufweist, das ausgestaltet ist, die sich in den Pufferaufnahmen (24) befindlichen Glasbehälter (2) aus den Pufferaufnahmen (24) zu entnehmen, zur Sammeleinrichtung (46) zu transportieren und in der Sammeleinrichtung (46) abzulegen;
- wobei das Übergabesystem (42) eine Anzahl n von Haltern (41) aufweist, durch die jeweils ein Glasbehälter (2) aufnehmbar ist, und sich der Abstand (36) benachbarter Halter (41) vom Abstand (30) benachbarter Aufnehmer (6) unterscheidet.

15. Vorrichtung (1) nach Anspruch 14,
- wobei sich in einer Pufferentnahmestellung (38) die einen Glasbehälter (2) aufweisenden Pufferaufnahmen (24) in anderen Positionen (43) befinden als in der Pufferbestückungsstellung (32).

16. Vorrichtung (1) nach Anspruch 14 oder 15,
- wobei die Sammeleinrichtung (46) eine Anzahl l von Sammelaufnahmen (45) aufweist, in denen jeweils ein Glasbehälter (2) aufnehmbar ist, und wobei l ein ganzzahliges Vielfaches von n oder um (n-1) größer als ein ganzzahliges Vielfaches von n ist.

17. Vorrichtung (1) nach einem der Ansprüche 14 bis 16,
- wobei die Vorrichtung (1) ein Transfersystem (48) und
- einen von der Sammeleinrichtung (46) beabstandete Verpackungsstation (62), in der eine Verpackung (60) für Glasbehälter (2) bereitstellbar ist, aufweist,
- wobei das Transfersystem (48) ausgestaltet ist, eine Anzahl von p Glasbehältern (2) aus der Sammeleinrichtung (46) zu entnehmen, zur Verpackungsstation (62) zu transportieren und in einer Verpackung (60) abzulegen, und
- wobei p kleiner als I ist.
